# EUROPEAN PATENT APPLICATION

(11) **EP 4 582 776 A1**
(43) Date of publication of application: **09.07.2025**
(21) Application number: 24223557.0
(22) Date of filing: 27.12.2024
(51) Int. Cl.: G01D 11/24

(54) **SENSOR NODE AND ASSEMBLIES**

(30) Priority: 03.01.2024 US 202418403491
(71) Applicant: Fortifyit Technology Solutions, LLC, Carrollton, TX 75006 (US)
(72) Inventor: ILIFF, David, Highland Park, TX (US); DAILEY, Phillip, Prosper, TX (US); PETERSEN, Nick, Magnolia, TX (US); McCORMICK, Kelly, Prosper, TX (US); VALENTINE, Bryan, Justin, TX (US); HARSHIL, Patel, Mount Laurel, NJ (US); CARLSON, Robert, Boise, ID (US); DREWERY, Adam, Lee's Summit, MO (US); FLAHERTY, Bill, Dunstable, MA (US); ROBERTS, Jose, Spanish Fort, AL (US)
(74) Representative: Forresters IP LLP

(57) **Abstract**

A sensor node (200) configured to measure one or more parameters of a piece of equipment and communicate with a sensor network, the sensor node comprising: a sensor board (240) comprising a plurality of electrical contacts (242, 244); and a sensor housing (201) defining a cavity, wherein the sensor board is disposed within the cavity, the sensor housing comprising: a first side wall (208) defining a window (230), wherein the window exposes the plurality of electrical contacts of the sensor board; and a first sliding lock leg (250) extending from the first side wall and defining a groove (205) between the first sliding lock leg and the first side wall.

## Description

### TECHNICAL FIELD

The present disclosure relates to sensors and assemblies for use with a distributed sensor network.

### BACKGROUND

A loading dock or loading bay is an area that is used for unloading and loading goods. These areas are often found in commercial and industrial buildings, such as warehouses. These areas are often part of the facility's service or utility structure and provide direct access to staging areas, storage rooms, and freight elevators. A loading bay will typically be equipped with equipment including bumpers, dock levelers, dock lifts, dock seals or dock shelters, vehicle restraint systems, dock lights, and indicator lights.

In certain applications, it is essential to the safety of the workers and the operation of these facilities that this equipment be working properly. For example, the overhead door provides a barrier between the facilities staging areas, storage rooms, and freight elevators. A malfunctioning door can create safety and security issues if these areas cannot be isolated. In another example, a dock leveler is a height-adjustable platform used as a bridge between the loading dock and truck. The dock leveler can be operated via mechanical, hydraulic, or air powered systems. A malfunctioning dock leveler can create safety issues and cause delays if it cannot be available for the loading and unloading of goods. In some applications, ensuring that the overhead door and dock leveler, as well as other components, are functioning properly are essential to operations at these facilities.

In certain applications, it may be desired to continuously monitor the activity and health of the loading dock equipment in real time to ensure proper functioning. However, implementing, mounting, and maintaining the monitoring equipment can be expensive, time-consuming, labor intensive, and cause its own delays if it is not functioning properly. Therefore, what is needed is an apparatus to monitor this equipment that is affordable, and easy to install, maintain, and use.

### SUMMARY

A sensor node configured to measure one or more parameters of a piece of equipment and communicate with a sensor network, the sensor node comprising: a sensor board comprising a plurality of electrical contacts; and a sensor housing defining a cavity, wherein the sensor board is disposed within the cavity, the sensor housing comprising: a first side wall defining a window, wherein the window exposes the plurality of electrical contacts of the sensor board; and a first sliding lock leg extending from the first side wall and defining a groove between the first sliding lock leg and the first side wall, wherein the first sliding lock leg is aligned with the plurality of electrical contacts of the sensor board through the window.

A sensor module comprising, a sensor node configured to measure one or more parameters of a piece of equipment and communicate with a sensor network, the sensor node comprising: a sensor board comprising an electrical contact; and a sensor housing defining a cavity, wherein the sensor board is disposed within the cavity, the sensor housing comprising: a first side wall defining a window, wherein the window exposes the electrical contact of the sensor board; and a first sliding lock leg extending from the first side wall and defining a groove between the first sliding lock leg and the first side wall; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; and a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel.

A sensor module, comprising: a sensor node configured to measure one or more parameters of a piece of equipment and communicate with a sensor network, the sensor node comprising: a sensor board comprising an electrical contact; and a sensor housing defining a cavity, wherein the sensor board is disposed within the cavity, the sensor housing comprising: a first side wall defining a window, wherein the window exposes the electrical contact of the sensor board; and a first sliding lock leg extending from the first side wall and defining a groove between the first sliding lock leg and the first side wall; a second side wall opposite the first wall; a first ledge defining a first recessed area within the second side wall; wherein the first recessed area is configured to receive a mating component relative to the sensor housing and the first ledge is configured to connect between the first sliding lock leg and the mating component into place; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; and the battery pack body defining a ramp profile, wherein the ramp profile is disposed on a movable member extending from the surface of the battery pack body that is opposite the first slide lock channel; a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and a mounting plate configured to be coupled to a piece of equipment, the mounting plate comprising: a mounting plate base; a non-deflectable end wall extending perpendicular to the mounting plate base, wherein the mounting plate base and the non-deflectable end wall receive the sensor node and the battery pack; a ramped retention protrusion extending perpendicular to the end wall, wherein the non-deflectable end wall is biased to engage the ramped retention protrusion with the recessed area of the sensor node and releasably retain the sensor node and the battery pack to the mounting plate.

A sensor module comprising, a sensor node configured to measure one or more parameters of a piece of equipment and communicate with a sensor network, the sensor node comprising: a sensor board comprising an electrical contact; and a sensor housing defining a cavity, wherein the sensor board is disposed within the cavity, the sensor housing comprising: a first side wall defining a window, wherein the window exposes the electrical contact of the sensor board; and a first sliding lock leg extending from the first side wall and defining a groove between the first sliding lock leg and the first side wall; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; the battery pack body defining a U-shaped profile with a central channel; and a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and a locking insert comprising: a first wall; and a second wall movable relative to the first wall, wherein the locking insert is disposed within the central channel of the battery pack body and the second wall is movable to releasably couple the locking insert to the battery pack body.

Disclosed is a sensor node configured to measure one or more parameters of a piece of equipment and communicate with a sensor network, the sensor node comprising: a sensor board comprising a plurality of electrical contacts; and a sensor housing defining a cavity, wherein the sensor board is disposed within the cavity, the sensor housing comprising: a first side wall defining a window, wherein the window exposes the plurality of electrical contacts of the sensor board; and a first sliding lock leg extending from the first side wall and defining a groove between the first sliding lock leg and the first side wall.

The first sliding lock leg may be configured to retain a battery pack relative to the sensor housing.

The first sliding lock leg may further comprise: a narrow portion adjacent to the first side wall; a wider portion on the portion away from the wall; and wherein the narrow portion adjacent to the first side wall and the wider portion on the portion away from the wall define the groove.

The sensor housing may further comprise a second sliding lock leg extending from the first side wall and defining a groove between the second sliding lock leg and the first side wall, wherein the second sliding lock leg is configured to retain a battery pack relative to the sensor housing and align a plurality of electrical contacts of the sensor board through the window.

The first sliding lock leg may be parallel to the second sliding lock leg.

The first sliding lock leg and second sliding lock leg may be positioned on opposite sides of the window.

The sensor housing may further comprise a third wall defining a groove, wherein the groove is configured to retain a mating component relative to the sensor housing.

The sensor housing may further comprise: a second side wall defining a first recessed area; the first recessed area may comprise a ledge, wherein the ledge is configured to retain a mating component relative to the sensor housing.

The sensor housing may further comprise: a second side wall defining a first recessed area; the first recessed area may comprise a ledge, wherein the ledge is configured to retain a mating component relative to the sensor housing, and the mating component may be a mounting plate.

Also disclosed is a sensor module comprising: a sensor node as above; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; and a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel.

The battery pack body may have a generally rectangular prism shape.

The battery pack body may have a generally rectangular prism shape and the first slide lock channel and the battery connector interface may be disposed on a base of the rectangular prism shape of the battery pack body.

The sensor module may further comprise a mounting plate coupled to the battery pack and the sensor node, wherein the mounting plate may be configured to be coupled to the piece of equipment.

The mounting plate may be configured to be coupled to a piece of loading dock equipment.

The battery pack body may define a U-shaped profile with a central channel.

The battery pack body may define a U-shaped profile with a central channel and the first slide lock channel and the battery interface may be disposed opposite to the central channel of the battery pack body.

The battery pack body may define a U-shaped profile with a central channel and the central channel of the battery pack body may be configured to receive a shaft of a piece of equipment.

The battery pack body may define a U-shaped profile with a central channel and the central channel of the battery pack body may be configured to receive a shaft of a piece of equipment, and the sensor module may further comprise a locking insert disposed within the central channel of the battery pack body and releasably coupled to the battery pack body.

The battery pack body may define a U-shaped profile with a central channel and the central channel of the battery pack body may be configured to receive a shaft of a piece of equipment, and the sensor module may further comprise a locking insert disposed within the central channel of the battery pack body and releasably coupled to the battery pack body, and the locking insert may be configured to capture a shaft of a piece of equipment between the locking insert and the battery pack body to couple the sensor module to the piece of equipment.

The connection of the electrical contacts of the sensor and the battery connector interface may be sealed.

Also disclosed is a sensor module, comprising: a sensor node as above; a second side wall opposite the first wall; a first ledge defining a first recessed area within the second side wall; wherein the first recessed area is configured to receive a mating component relative to the sensor housing and the first ledge is configured to connection between the first sliding lock leg and the mating component into place; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; and the battery pack body defining a ramp profile, wherein the ramp profile is disposed on a movable member extending from the surface of the battery pack body that is opposite the first slide lock channel; a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and a mounting plate configured to be coupled to a piece of equipment, the mounting plate comprising: a mounting plate base; a non-deflectable end wall extending perpendicular to the mounting plate base, wherein the mounting plate base and the non-deflectable end wall receive the sensor node and the battery pack; a ramped retention protrusion extending perpendicular to the end wall, wherein the non-deflectable end wall is biased to engage the ramped retention protrusion with the recessed area of the sensor node and releasably retain the sensor node and the battery pack to the mounting plate.

The ramped retention protrusion may be deflected away from the non-deflectable end wall to release the sensor node and the battery pack from the mounting plate.

The mounting plate may be coupled to loading dock equipment.

The mounting plate may be coupled to loading dock equipment and the sensor node may be capable of measuring parameters of the loading dock equipment.

The mounting plate may be coupled to loading dock equipment and the loading dock equipment may be a door.

The mounting plate may further comprise: a second end wall extending perpendicular to the mounting base plate and opposite the non-deflectable end wall; and a ledge extending perpendicular to the second end wall, wherein the ledge engages the ramp profile extending from the battery pack body.

Also disclosed is a sensor module comprising a sensor node as above; a battery pack configured to energize the sensor node, the battery pack comprising: a battery pack body containing one or more battery cells, the battery pack body defining a first slide lock channel, wherein the first slide lock channel receives the first sliding lock leg of the sensor housing to retain the sensor node to the battery pack; the battery pack body defining a U-shaped profile with a central channel; and a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and a locking insert comprising: a first wall; and a second wall movable relative to the first wall, wherein the locking insert is disposed within the central channel of the battery pack body and the second wall is movable to releasably couple the locking insert to the battery pack body.

The locking insert may further comprise a set of teeth disposed on an external surface of the first wall, wherein the set of teeth engage the body of the battery pack body.

The battery pack body may further comprise a plurality of teeth disposed on an inner surface of the central channel to engage with the locking insert.

The central channel of the battery pack may be configured to receive a shaft of a piece of equipment.

The locking insert may further comprise: a first flexible tab; a second flexible tab parallel to the first flexible tab; and a retaining feature positioned between the first flexible tab and the second flexible tab, wherein the retaining feature is configured to allow the first flexible tab and second flexible tab to be pushed together.

The locking insert may further comprise: a first movable member adjacent to the first wall, wherein the first movable member can be deflected towards the body of the locking insert; a second movable member adjacent to the second wall, wherein the second movable member can be deflected toward the body of the locking insert; and the first movable member and second movable member are configured to deflect when coupled to a shaft of a piece of equipment.

### BRIEF DESCRIPTION OF DRAWINGS

The accompanying drawings, which are included by way of example only to provide further understanding and are incorporated in and constitute a part of this specification, illustrate disclosed embodiments and together with the description serve to explain the principles of the disclosed embodiments. In the drawings:
FIG. 1 is an exemplary embodiment of a distributed sensor network.
FIG. 2 is a rear perspective of a sensor node.
FIG. 3 is a front perspective of a sensor node.
FIG. 4 is an exemplary embodiment of the battery pack with a perspective of the primary end.
FIG. 5 is a perspective of the secondary end of the battery pack.
FIG. 6 is an exemplary embodiment of a sensor node engaged with a battery pack.
FIG. 7 is a cross-sectional view of the sensor module.
FIG. 8 is a bottom perspective of the mounting plate.
FIG. 9 is an exemplary embodiment of the mounting plate.
FIG. 10 is a perspective of the secondary end of the sensor module within a mounting plate.
FIG. 11 is an exemplary embodiment of a sensor module within a mounting plate from the primary end perspective.
FIG. 12 is an exemplary embodiment of a sensor node engaged within a torsional battery pack.
FIG. 13 is a cross-sectional perspective of a torsional battery pack.
FIG. 14 is a side perspective of a torsional battery pack.
FIG. 15 is a top perspective of a torsional battery pack.
FIG. 16 is an exemplary embodiment of a locking insert.
FIG. 17 is an exemplary embodiment of a sensor node engaged within a torsional battery pack.

### DETAILED DESCRIPTION

The present disclosure relates generally to a distributed sensor network, and more particularly, to the sensors used in this network. As described herein, embodiments of the sensor improves upon certain conventional sensors.

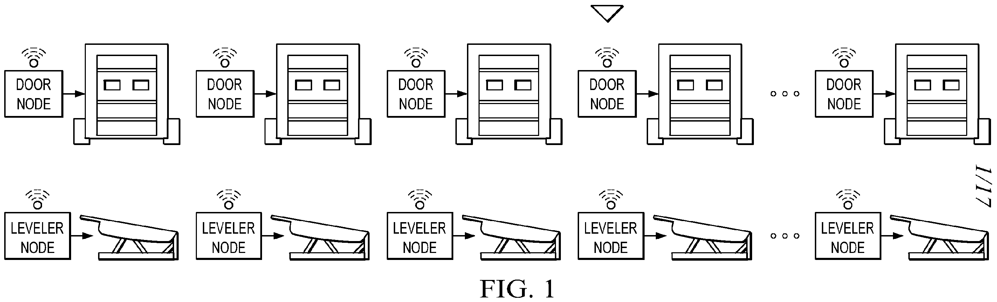

A distributed sensor network can be used to detect parameters and monitor the activity and health of loading dock equipment or any other suitable equipment. As described herein, a plurality of sensors can be coupled to various pieces of equipment (e.g. doors and levelers) as shown in FIG. 1. Advantageously, the sensors can be used to monitor activity of the equipment, such as opening and closing of the door or activation and deactivation of the leveler, the health of the equipment, and communicate this information to a central server so that operations of the equipment can be optimized, maintenance of the equipment can be scheduled, and failure of the equipment can be identified and/or predicted. Embodiments of the sensors include design features to allow for easy installation and maintenance, and flexible operation permitting continuous and reliable monitoring of this equipment. Certain embodiments of the sensors can be tailored to use with a door and/or leveler.

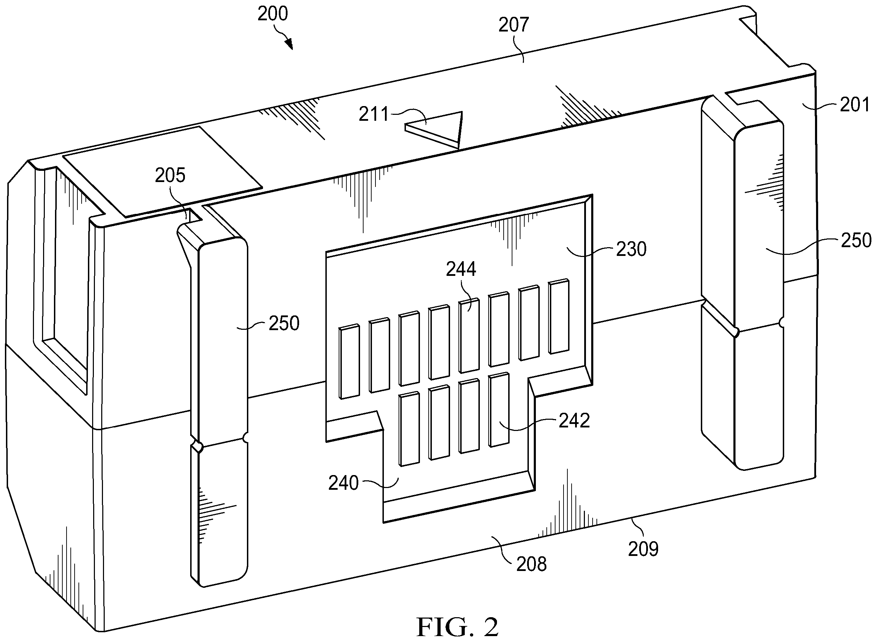

Referring to FIG. 2, an exemplary embodiment of the sensor node 200 is shown. As discussed above, a sensor node 200 can detect or sense one or more parameters of the corresponding equipment to monitor the activity and health of the equipment. In the depicted example, a sensor node 200 includes a sensor board 240 that includes one or more sensing devices or components to detect one or more parameters and provide the sensed parameters to the sensor network. The sensor board 240 can include, but is not limited to, an accelerometer, a vibrometer, a thermometer, an inclinometer, a microphone, a hygrometer, a hydrometer, a camera, a thermal camera, a light sensor, or any other suitable sensor or combination thereof. In some embodiments, the sensor board 240 can send and receive information and receive power through a set of electrical connectors or contacts 242. The sensor board 240 can further include wireless network components to transmit sensor information to the appropriate device or server using the sensor network.

As illustrated, the sensor board 240 is disposed in a sensor housing 201 to protect and enclose the sensor board 240. In the depicted example, walls of the sensor housing 201 define a cavity to contain the sensor board 240. A first wall 208 of the sensor housing 201 includes a window 230 to provide connectivity to the sensor board 240 housed within the sensor housing 201. As illustrated, the window 230 provides access to the set of electrical contacts 242, 244 of the sensor board 240 through the sensor housing 201. Advantageously, the window 230 allows the electrical contacts 242, 244 of the sensor board 240 to interface with other components, such as a battery pack 300, while the sensor board 240 is enclosed and protected by the sensor housing 201.

In some applications, the sensor node 200 can be coupled to other components, such as the battery pack 300 and/or a mounting plate 350. The sensor housing 201 includes slide lock legs 250 (also referred to as sliding lock legs), which engage with mating channels of other components, such as a battery pack 300, as will be discussed in more detail below. As illustrated, the slide lock legs 250 can extend from the first wall 208 of the sensor housing 201. Advantageously, the slide lock legs 250 have a narrow portion adjacent to the first wall 208 and a wider portion on the portion away from the wall, defining a groove 205 between the first wall 208 and the wider portion of the slide lock legs 250. This groove can engage with a mating feature of another component, such as a battery pack 300, as will be discussed in further detail below. The slide lock legs 250 are positioned parallel to each other with each slide lock leg 250 extending from the top side 207 of the sensor housing 201 towards the bottom side 209 of the sensor housing 201. An alignment arrow 211 is centered on the top side 207 of the sensor housing 201. The slide lock legs 250 are positioned on either side of the window 230 at an equal distance from the window. Advantageously, the slide lock legs 250 are positioned such than when the alignment arrow 211 is aligned with the alignment arrow of another component, a mechanical attachment or coupling is made, and the window 230 aligns with another component so an electrical connection is also made.

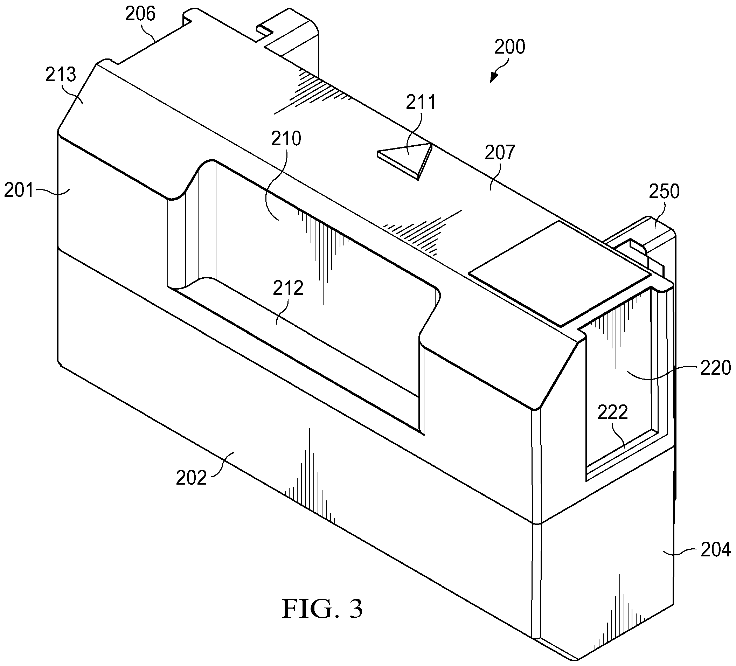

Referring to FIG. 3, the sensor housing 201 can include a first recessed area 210 to engage with mating features of other components, such as the mounting plate 350. As illustrated, the sensor housing 201 includes a second wall 202 and an angled wall 213, wherein the angled wall 213 is adjacent to the top side 207 and to the second wall 202. Advantageously, the first recessed area 210 extends from the angled wall 213 to a first leveled step 212, defining the first recessed area 210. The depth and width of the first recessed area 210 is defined by a leveled step 212 of the sensor housing 201. The leveled step 212 extends from one end of the second wall 202 to the other end of the second wall 202 such that the width of the leveled step 212 is greater than the height of the first recessed area 210. The leveled step 212 can engage with a mating feature of another component, such as a mounting plate 350, as will be discussed in further detail below. The first recessed area 210 is positioned at the center of the upper half of the second wall 202. Advantageously, the first recessed area 210 is positioned such than when a mechanical attachment is made, the recessed area 210 receives a mating feature of another component so that the leveled step 212 can engage with the mating feature.

The sensor housing 201 can include a second recessed area 220 to engage with mating features of other components, such as the mounting plate 350. As illustrated, the sensor housing 201 includes a third wall 204, wherein the third wall 204 is adjacent to the first wall 208, the second wall 202, and the top side 207. Advantageously, the second recessed area 220 extends from the top side 207 to a second leveled step 222, defining the second recessed area. The depth and width of the second recessed area 222 is defined by the second leveled step 222 of the sensor housing 201. The second leveled step 222 extends from one end of the third wall 204 to the other end of the third wall 204 such that the width of the leveled step 222 is less than the height of the second recessed area 220. In some embodiments, the depth of the second leveled step 222 is less than the depth of the first leveled step 212. The second leveled step 222 can engage with a mating feature of another component, such as a battery pack 600, as will be discussed in further detail below. The second recessed area 220 is positioned at the center of the upper half of the second wall 202. Advantageously, the second recessed area 220 is positioned such than when a mechanical attachment is made, the recessed area 220 receives a mating feature of another component so that the leveled step 222 can engage with the mating feature.

The sensor housing 201 can include a third recessed area to engage with mating features of other components, such as the battery pack 600. The sensor housing 201 includes a fourth wall 206, wherein the fourth wall 206 is opposite the third wall 204. Advantageously, the fourth wall 206 and third recessed area is symmetrical to the third wall 204 and second recessed area 220. Advantageously, the third recessed area and second recessed area 220 are symmetrical such that a mechanical attachment can be made on both sides, securing the mechanical attachment to another component.

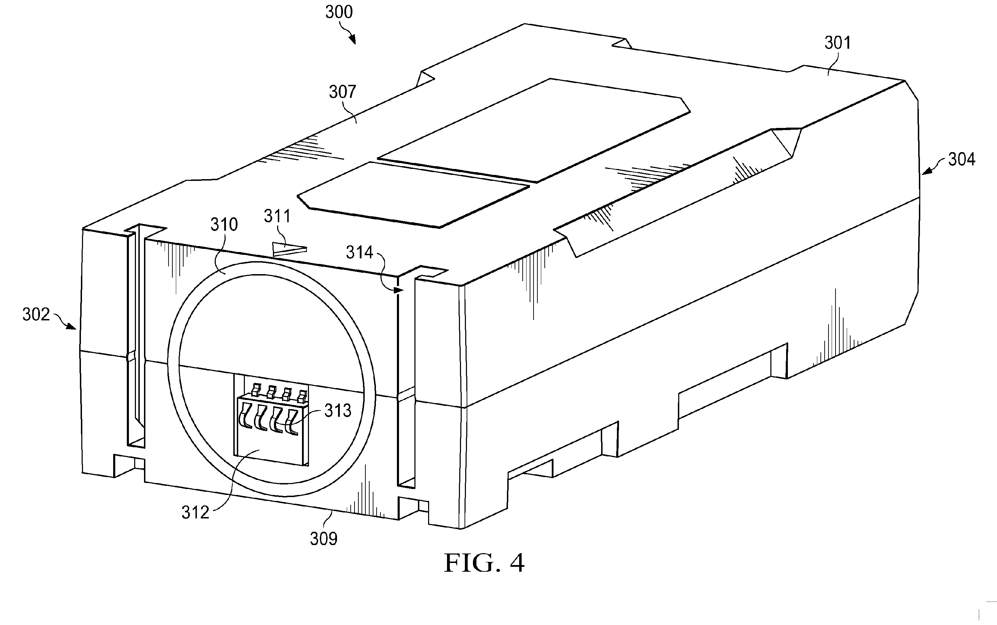

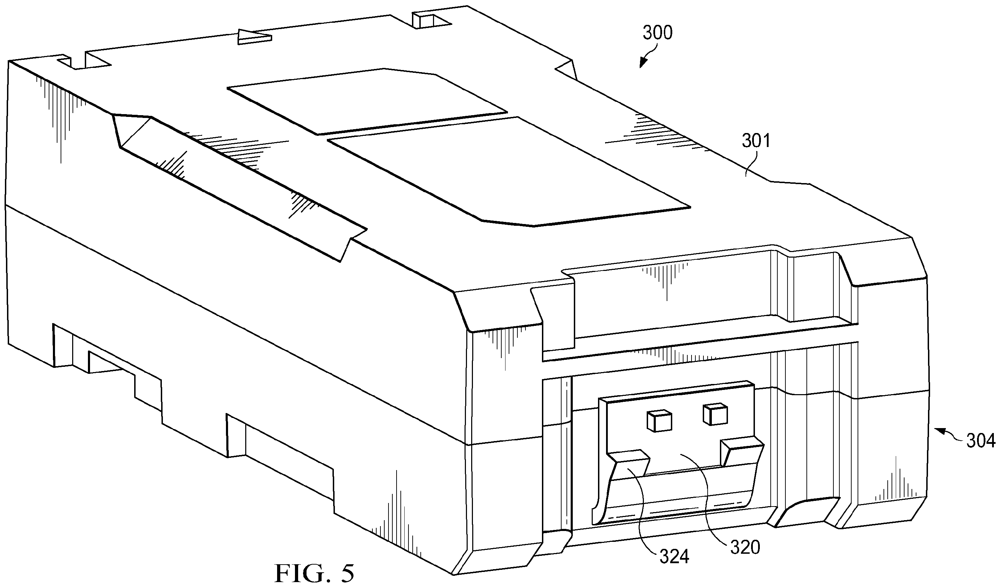

In some embodiments, the sensor can be powered by a battery. Referring to FIGS. 4-7, the battery pack 300 provides electrical energy from battery cells 380 to the attached sensor node 200. As illustrated, the battery pack 300 includes one or more battery cells 380 disposed within a cavity 303 of the battery housing 301. Electrical energy from the battery cells 380 is provided to the sensor node 200 through a surface mounted connector 312 disposed on a first wall 302 of the battery housing 301. In some embodiments, the surface mounted connector 312 includes electrical contacts 313 that are electrically connected to the battery cells 380 within the battery pack 300. In the depicted example, when the sensor node 200 is coupled to the battery pack 300, the window 230 exposes the electrical contacts 242, 244 and the electrical contacts 242, 244 are in physical and electrical contact with the electrical contacts 313 of the surface mounted connector 312 to allow the flow of electricity form the battery cells 380 to the sensor board 240. In some embodiments, the electrical contacts 313 can be biased or spring contacts to maintain contact with the electrical contacts 242, 244.

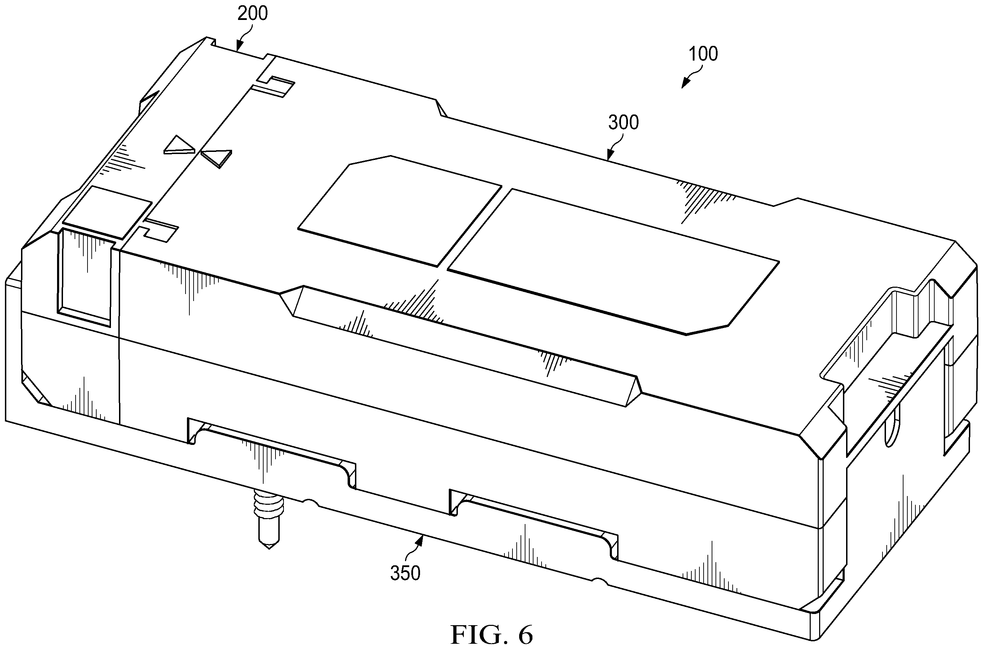

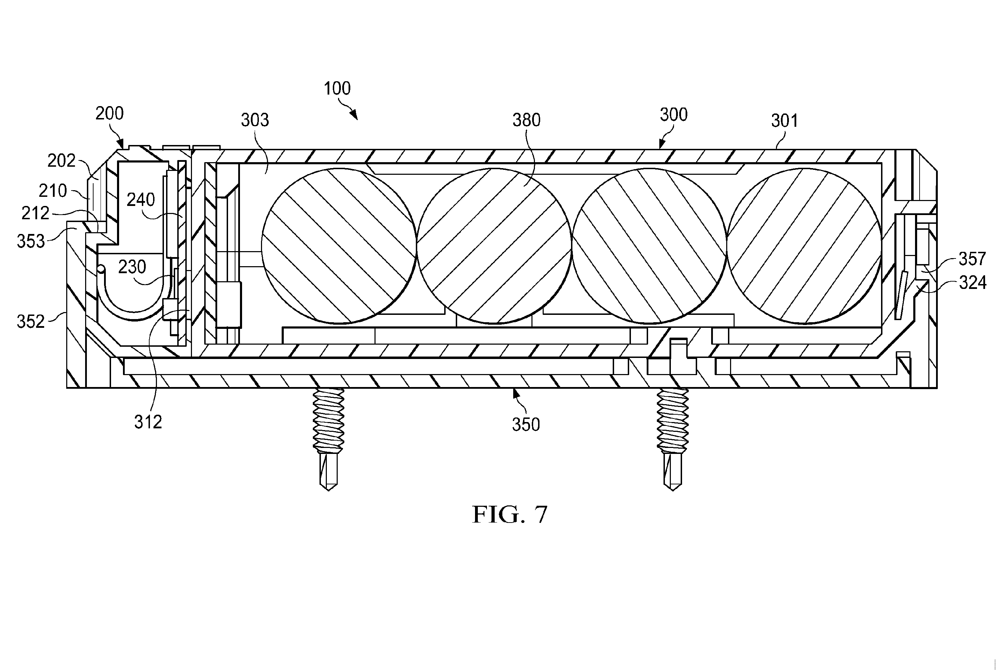

As illustrated in FIGS. 6 and 7, the sensor node 200 can be coupled to the battery pack 300. The battery housing 301 includes slide lock channels 314 to receive the slide lock legs 250 of the sensor node 200. As illustrated, the slide lock channels 314 can be formed or defined in the first wall 302 of the battery housing 301. Advantageously, the channels 314 have a narrow portion adjacent to the wall 302 and a wider portion within the battery housing 301, corresponding to the geometry of the slide lock legs 250. The slide lock channels 314 can engage with a mating feature of another component, such as the slide lock legs 250 of the sensor housing 201. The slide lock channels 314 are positioned parallel to each other with each slide lock channel 314 extending from the top side 307 of the battery housing 301 towards the bottom side 309 of the battery housing 301. An alignment arrow 311 is centered on the top side 307 of the battery housing 301. The slide lock channels 314 are positioned on either side of the surface mounted connector 312 at an equal distance from the surface mounted connector 312. Advantageously, the slide lock channels 314 are positioned such than when the alignment arrow 311 is aligned with the alignment arrow of another component, such as the alignment arrow 211 of the sensor housing 201, a mechanical attachment or coupling is made, and the electrical contacts 313 align with another component so an electrical connection is also made.

When the slide lock channels 314 of the battery pack 300 receive the slide lock legs 250 of the sensor node 200, the sensor node 200 can be mechanically coupled to the battery pack 300. Additionally, the window 230 of the sensor node 200 can align with the surface mounted connector 312 of the battery pack 300, enabling the spring contacts 313 of the battery pack 300 to interface with electrical contacts 242 providing an electrical connection between the sensor node 200 and the cells 380 within the battery pack 300. An o-ring 310 provides a seal around the electrical connection isolating the sensor board 240 from moisture and dirt. As illustrated, the o-ring 310 can be disposed on or coupled to the first wall 302 of the battery housing 301. In some embodiments, the o-ring 310 is disposed between the slide lock channels 314 and surrounding the surface mounted connector 312. The o-ring 310 can be formed from an elastomeric material.

Advantageously, the sensor node 200 and battery pack 300 can be securely coupled to ensure the physical and electrical connection is maintained, but can be easily disassembled or assembled. The modular construction and ease of assembly and disassembly allows for the battery pack 300 or sensor node 200 to be easily replaced as necessary.

Further, the battery housing 301 can include a one or more ramped protrusions 324 to engage with mating features of other components, such as the mounting plate 350. The ramped protrusions 324 can be disposed on a movable plate or member 320 extending from a surface of the battery housing 301. The movable member 320 can be biased or deflectable away from the body of the battery housing 301 to selectively engage with a mating component. The movable member 320 can extend or otherwise be coupled to a second wall 304 of the battery housing 301.

In some embodiments, the components of the battery pack 300, such as the battery cells 380, can be arranged, shaped, or otherwise configured to provide a desired shape, external envelope, or configuration for a certain application. For example, the components of the battery pack 300 can be arranged to provide an overall rectangular prism or "brick" shape. In some applications, a rectangular prism shaped battery pack 300 can be mounted on a planar surface such as a wall or on a portion of a moving door. The battery pack 300 can be sized, shaped, or otherwise configured to include a desired number of battery cells 380 and/or for a desired mounting application.

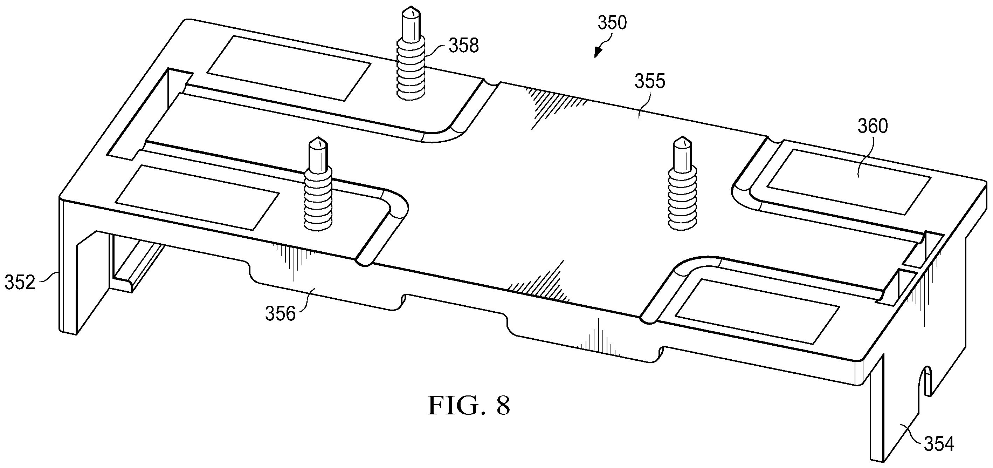

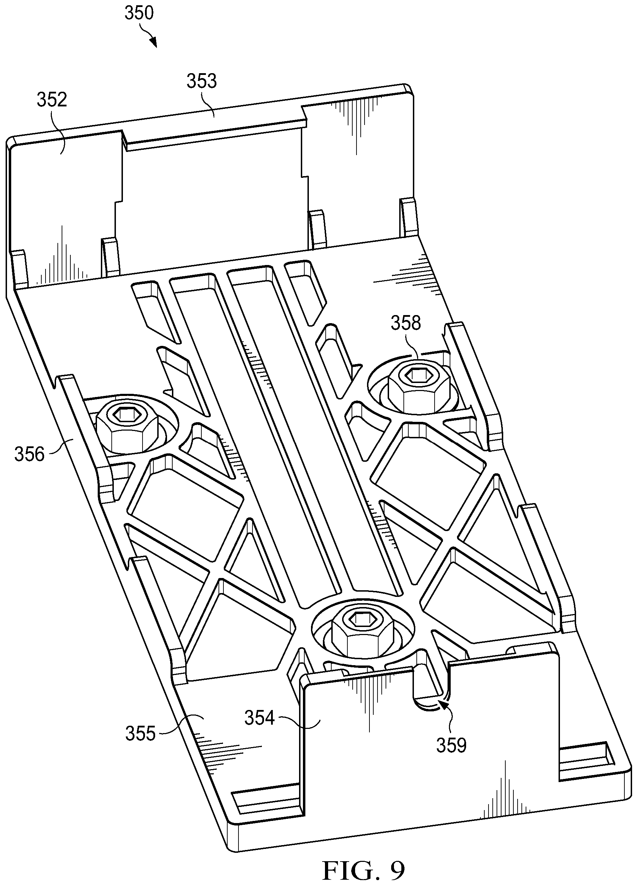

With reference to FIGS. 8-11, a mounting plate 350 can allow the sensor node 200 and the battery pack 300 to be removably coupled to a piece of equipment, such as a door. In the depicted example, the mounting plate 350 includes a base 355 to receive the battery pack 300. The base 355 can have a generally rectangular profile to receive and support the battery pack 300. As illustrated, the mounting plate 350 can include one or more features extending from the base 355 to locate and retain the battery pack 300 relative to the mounting plate 350. For example, the mounting plate 350 can include a primary retaining wall 352 and a secondary retaining wall 354. As illustrated, the primary retaining wall 352 includes a lip 353. The lip 353 is adjacent to the primary retaining wall 352 and extends towards the secondary retaining wall 354. The lip is positioned at the top of the primary retaining wall 352 and extends the width of the primary retaining wall 352. Advantageously, the lip 353 can engage with a mating feature of another component, such as the leveled step 212 of the sensor housing 201. As illustrated, the secondary retaining wall 354 includes a ledge 357. The ledge 357 is adjacent to the secondary retaining wall 354 and extends towards the primary retaining wall 352. The ledge is centered on the secondary retaining wall 354 and extends the width of the secondary retaining wall 354. Advantageously, the primary retaining wall 352 and secondary retaining wall 354 are rigid and do not flex in relation to the mounting plate base 355. Further, the mounting plate 350 can include side retaining tabs 356 to further locate and retain the battery pack 300 relative to the mounting plate 350. In certain embodiments, each side of the mounting plate 350 includes two side retaining tabs 356. The retaining tabs 356 are adjacent to the base 355 of the mounting plate 350 and extend away from the base 355 of the mounting plate 350. Advantageously, the retaining tab 356 are positioned such that when a mechanical attachment is made, the mounting plate receives a mating feature of another component, such as the battery pack 300 coupled to the sensor node 200.

In certain applications, the mounting plate 350 can be coupled to a piece of equipment, such as a door or other asset to be monitored. As illustrated in FIG. 8, the mounting plate 350 can include mounting holes, adhesive portions and/or magnets 360 that can be used to couple the mounting plate 350 to a piece of equipment. The base 355 of the mounting plate 350 can be coupled to a portion of a door or any other flat surface flat surface with fasteners 358, adhesive or magnets 360, or both. Other suitable methods to attach the mounting plate 350 to a surface can be utilized. In some applications, the mounting plate 350 can be permanently affixed to the door or asset.

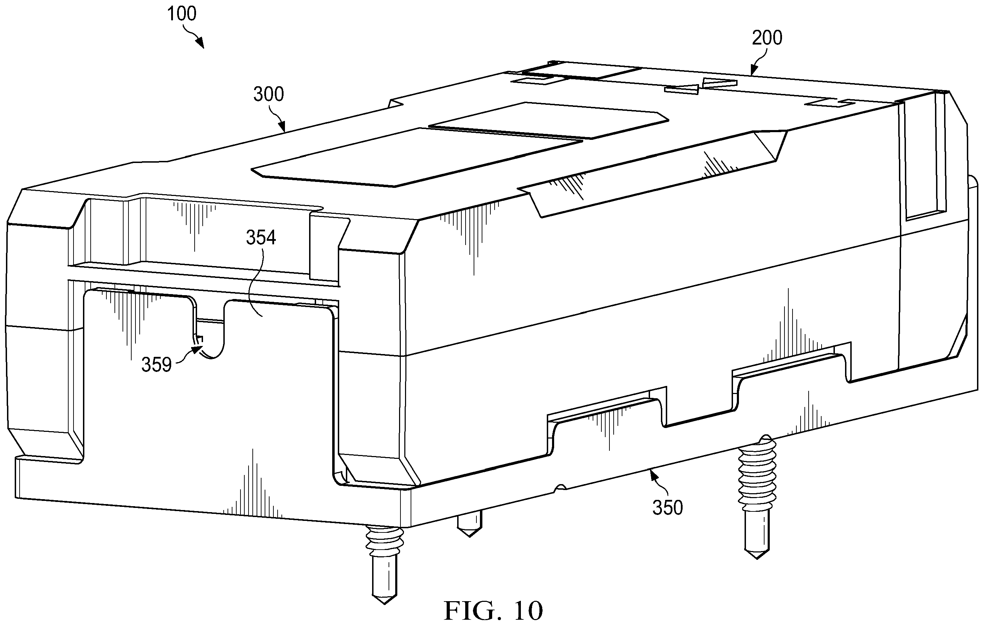

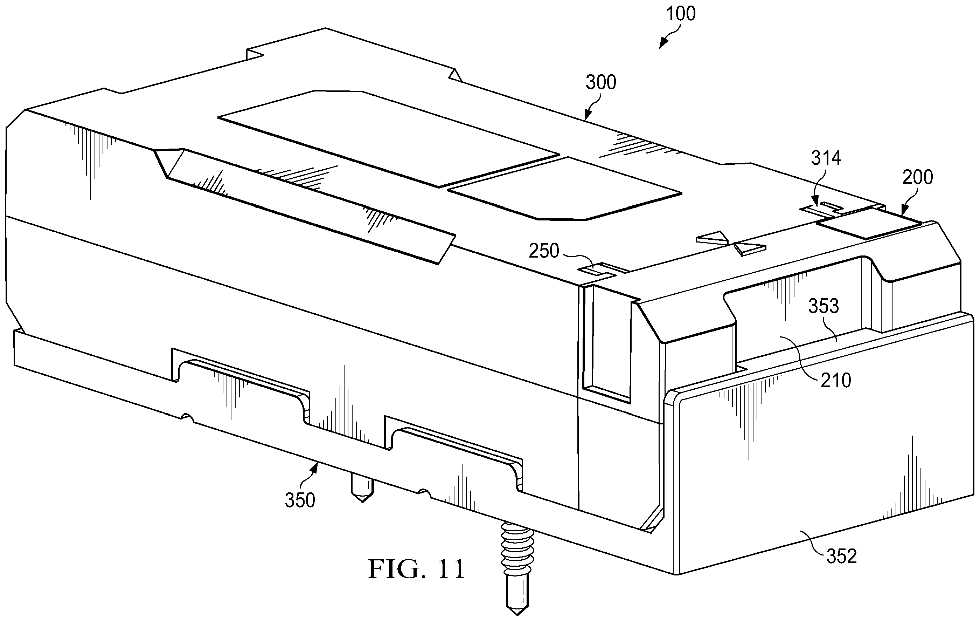

FIGS. 10 and 11 illustrate an assembled sensor module 100. As illustrated in FIGS. 10 and 11, the sensor node 200 is coupled with the battery pack 300 as described herein. The assembled sensor node 200 and battery pack 300 is inserted into the mounting plate 350. In the depicted example, the primary wall 352, secondary wall 354, and tabs 356 of the mounting plate 350 retain the battery pack 300 and sensor node 200 in the mounting plate 350 and can further retain the sensor node 200 in engagement with the battery pack 300. As discussed above, the primary retaining end 352 and secondary retaining end 354 are rigid. This allows the mounting plate 350 to retain the sensor node 200 and battery pack 300, such that the sensor module 100 can be mounted in any position including vertically or horizontally, such as on a door face, or upside down, such as on a leveler.

As described herein, and illustrated in FIG. 7, the first side 202 of the sensor node 200 interfaces with the primary retaining end 352 of the mounting plate 350. With reference to FIG. 11, when installing the module 100 on the mounting plate 350, the sensor module 100 is positioned at an angle so that the leveled step 212 of the sensor node 200 can slide under the lip 353 of the mounting plate 350. As illustrated, the recessed first area 210 receives the lip 353 of the primary retaining wall 352 and allows the leveled step 212 to engage with the lip 353 of the mounting plate 350. The base plate 355 and the engagement between the leveled step 212 and the lip 353 locks the sensor node 200 into place between the primary retaining end 352 of the mounting plate 350 and the battery pack 300.

With reference to FIG. 10, the secondary end 304 of the battery pack 300 interfaces with the secondary retaining wall 354 of the mounting plate 350. As shown in FIG. 7, the ramp profile 324 extending from movable member 320 of the battery housing 301 engages with the ledge 357 extending from the secondary retaining wall 354 of the mounting plate 350. The positioning of the base plate 355 and the engagement of the ramp profile 324 and the ledge 357 locks the sensor module 100 within the mounting plate 350.

During installation, the movable member 320 of the battery pack 200 can be deflected or pushed back toward the battery housing 301 to permit clearance or movement of the leveled step 212 relative to the lip 353 and/or the ramp profile 324 relative to the ledge 357. Advantageously, deflection of the movable member 320 allows engagement features of sensor module 100 to move past corresponding mating engaging features of the mounting plate 350 and snap into place. After installation, the movable member 320 can be biased to restore to an engaged position to retain the sensor module 100. During removal, the movable member 320 can be deflected inward to release engagement of the sensor module 100 from the mounting plate 350. In some embodiments, the secondary retaining wall 324 of the mounting plate 350 includes an access window 359 that provides access to the movable member 320 of the battery pack 300. In some applications, a small tool can be placed within the access window 359 to apply force and deflect the movable member 320 toward the battery housing 301 allowing the ramp profile 324 to disengage from the ledge 357 permitting the sensor module 100 to be removed.

The embodiments shown above allow the sensor module 100 to be secured to a piece of equipment such as a door while simultaneously allowing easy access to the components of the sensor module 100 for maintenance and replacement of the sensor node 200 and/or the battery pack 300.

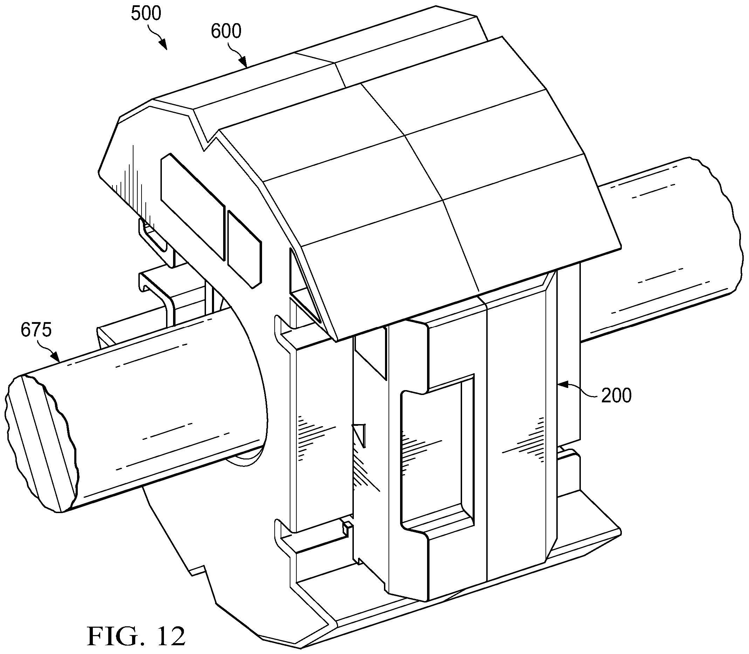

In some applications, a sensor assembly can be mounted, coupled, or otherwise attached to a shaft or rod of a piece of equipment to be monitored. Referring to FIG. 12, a sensor module 500 can include a battery pack 600 shaped to mount around an equipment shaft, permitting the sensor module 500 to be retained or coupled to the shaft. Advantageously, the previously described sensor node 200 can be attached or otherwise used in a modular fashion with the battery pack 600.

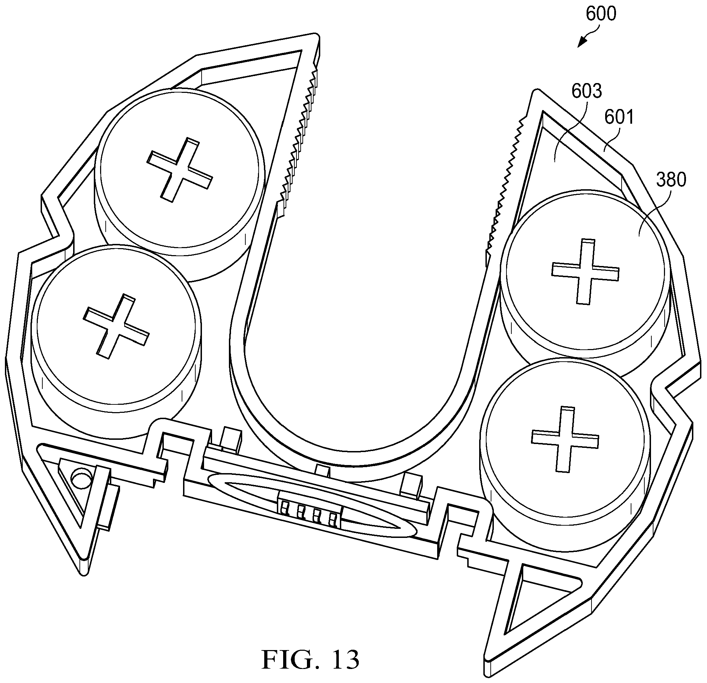

In an alternative embodiment, a battery pack 600 for a dock door torsion shaft application is used. Referring to FIGS. 12-15, in this embodiment, the battery pack 600 provides electrical energy form battery cells 380 to the attached sensor node 200 in a similar manner as the one discussed above. As illustrated, the battery pack 600 includes one or more battery cells 380 disposed within a cavity 603 of a battery housing 601. Similar to the manner discussed above, electrical energy from the battery cells 380 is provided to the sensor node 200 through a surface mounted connector 612 disposed on a first wall 602 of the battery housing 601. In some embodiments, the surface mounted connector 612 includes electrical contacts 613 that are electrically connected to the battery cells 380 within the battery pack 600. In the depicted example, when the sensor node 200 is coupled to the battery pack 600, the window 230 exposes the electrical contacts 242, 244 and the electrical contacts 242, 244 are in physical and electrical contact with the electrical contacts 613 of the surface mounted connector 612 to allow the flow of electricity from the battery cells 380 to the sensor board 240. In some embodiments, the electrical contacts 313 can be biased or spring contacts to maintain contact with the electrical contacts 242, 224.

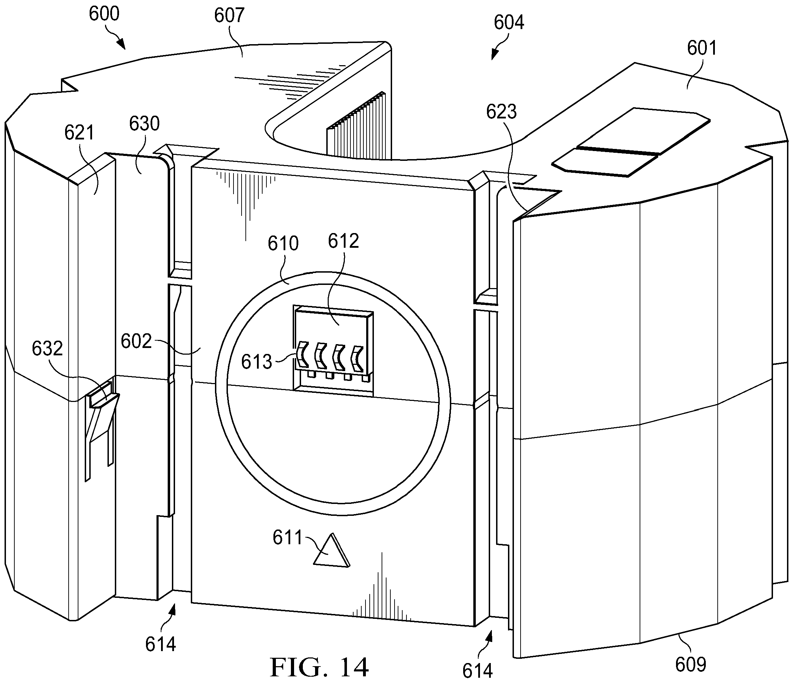

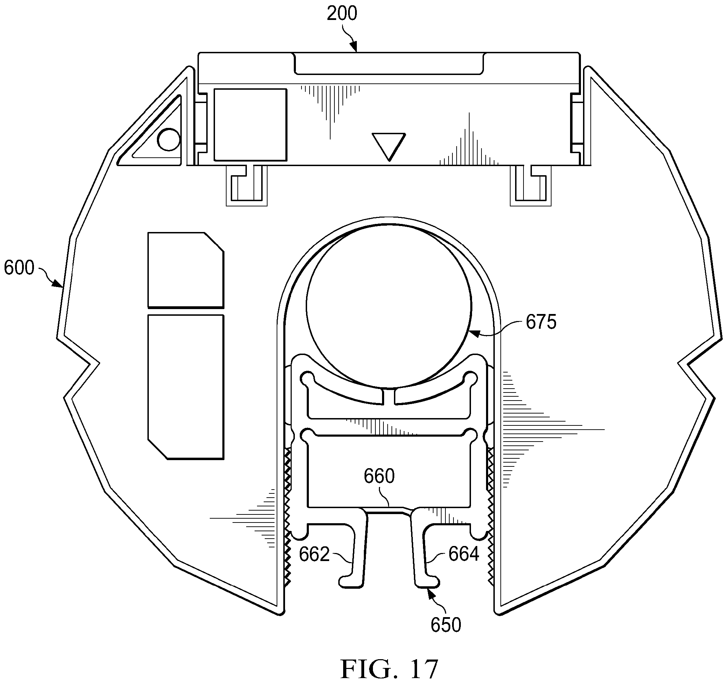

As illustrated in FIGS. 12 and 17, the sensor node 200 can be coupled to the battery pack 600. The battery housing 601 includes slide lock channels 614 to receive the slide lock legs 250 of the sensor node 200 within the first wall 602. As illustrated in FIG. 14, the slide lock channels 614 can be formed or defined in the first wall 602 of the battery housing 601. Advantageously, the slide lock channels 614 are shaped and positioned similarly to slide lock channels 314 in battery pack 300, such that the same sensor node 200 can be used with both battery packs. Similar to slide lock channels 314, slide lock channels 614 have a narrow portion adjacent to the wall 602 and a wider portion within the battery housing 601, corresponding to the geometry of the slide lock legs 250. The channels 614 can engage with a mating feature of another component, such as the slide lock legs 250 of the sensor housing 201. The slide lock channels 614 are positioned parallel to each other with each slide lock channel 614 extending from the top side 607 of the battery housing 601 towards the bottom side 609 of the battery housing 601. The slide lock channels 614 are positioned on either side of the surface mounted connector 612 at an equal distance from the surface mounted connector 612. Advantageously, the slide lock channels 614 are positioned such that when alignment arrow 611 is aligned with the alignment arrow of another component, such as the alignment arrow 211 of the sensor housing 201, a mechanical attachment or coupling is made, and the electrical contacts 613 align with another component so an electrical connection is also made.

When the slide lock channels 614 of the battery pack 600 receive the slide lock legs 250 of the sensor node, the sensor node 200 can be mechanically coupled to the battery pack 600. Additionally, the window 230 of the sensor node 200 can align with the surface mounted connector 612 of the battery pack 600, enabling the spring contacts 613 of the battery pack 600 to interface with electrical contacts 242 providing an electrical connection between the sensor node 200 and the battery cells 380 within the battery pack 600. An o-ring 610 provides a seal around the electrical connection isolating the sensor board 240 from moisture and dirt. As illustrated, the o-ring 610 can be disposed on or coupled to the first wall 602 of the battery housing 601. In some embodiments, the o-ring 610 is disposed between the slide lock channels 614 and surrounding the surface mounted connector 612. The o-ring 610 can be formed from an elastomeric material.

Advantageously, the sensor node 200 and battery pack 600 can be securely coupled to ensure the physical and electrical connection is maintained, but can be easily disassembled or assembled. The modular construction and ease of assembly and disassembly allows for the battery pack 600 or sensor 200 to be easily replaced as necessary.

The battery housing 601 includes a recessed area 630 within first wall 602. The recessed area 630 is defined by a second wall 621 adjacent to the first wall 602 and a third wall 623 adjacent to the first wall 602 and opposite the second wall 621. Second wall 621 and third wall 623 can include a one or more ramped protrusions 632 to engage with mating features of other components, such as second leveled step 222 of the sensor node 200. The ramped protrusions 632 can be biased or deflectable away from the body of the battery housing 601 to selectively engage with a mating component.

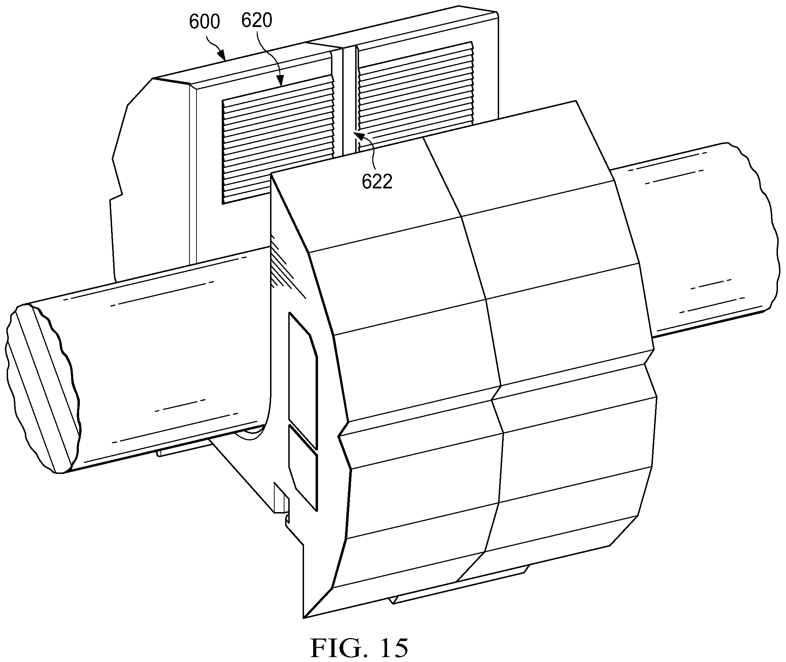

As illustrated in FIG. 15, battery housing 601 can include one or more sets of teeth 620 to engage with a mating feature of other components, such as locking insert 650. The battery housing 601 can also include a groove 622 to engage with mating features of other components, such as locking insert 650.

In some embodiments, the components of the battery pack 600, such as the battery cells 380, can be arranged, shaped, or otherwise configured to provide a desired shape, external envelope, or configuration for a certain application. For example, the components of the battery pack 600 can be arranged to provide a horseshoe or U-shape. In some application, a U-shaped battery pack 600 can be positioned on a cylindrical object, such as a shaft 675. The battery pack 600 can be fixed, shaped, or otherwise configured to include a desired number of battery cells 380 so that the battery pack 600 is balanced around the cylindrical object.

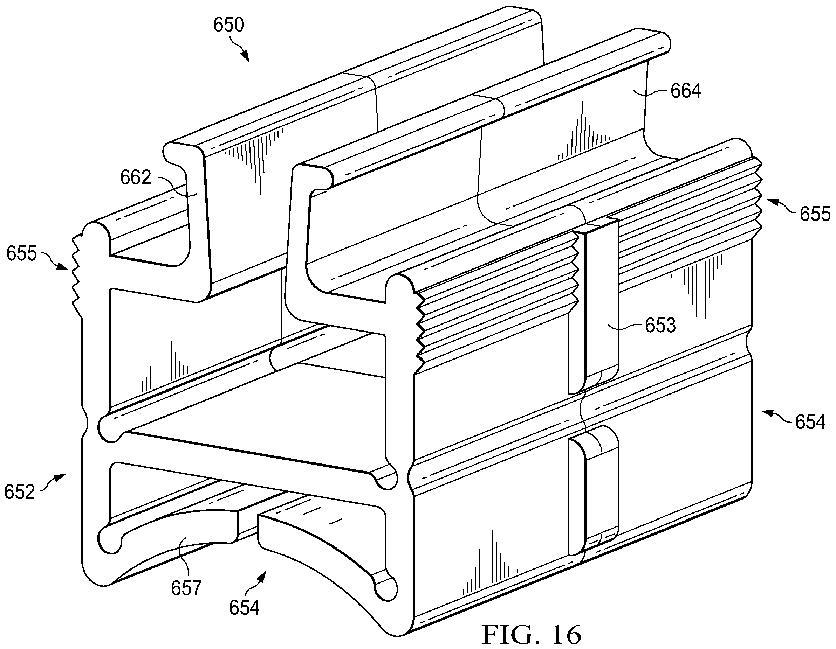

With reference to FIG. 16, a locking insert 650 can allow the battery pack 600 to be removably coupled to a piece of equipment, such as a shaft. In the depicted example, the locking insert 650 includes a first side 652 and second side 654. The first side 652 and second side 654 can have teeth 655 to engage the mating features of another component, such as the teeth 620 of the battery pack 600. The first side 652 and second side 654 also have tongue features 653 to engage the mating features of another component, such as the groove 622 of the battery pack 600. As illustrated, the locking insert 650 includes a first flexible member 662 and a second flexible member 664. The first flexible member 662 is parallel to first side 652 and extends above first side 652. The second flexible member 664 is parallel to second side 654. The first flexible member 662 and second flexible member 664 are parallel to each other and positioned above the teeth 655 on the first side 652 and second side 654. The first flexible member 652 and second flexible member 654 can be biased or deflectable towards each other and the center of the locking insert 650. The locking insert 650 includes an internal retaining feature 660. The internal retaining feature 660 is positioned between first side 652 and second side 654. The internal retaining feature 660 keeps the locking insert 650 locked in an engaged position.

In certain applications, the locking insert 650 can be coupled to a piece of equipment, such as a shaft 675 or other asset to be monitored. As illustrated in FIG. 16, the locking insert 650 can include movable members 657 and 654. Movable members 657 and 654 can be biased or deflectable towards the body of the locking insert 650 to selectively couple to a cylindrical component. In some embodiments, movable members 657 and 654 are configured to couple to a 1"-1.25" shaft.

During installation, the battery pack 600 can be pushed within the U-shape of the battery pack 600 such that the teeth of the locking insert 655 and the teeth of the battery pack 620 engage. Advantageously, as the locking insert 650 is pushed further within the U-shape movable members 654 and 657 are deflected or pushed back toward the locking insert 650 to receive the shaft 675. The force acting on the movable members 654 and 657 is transferred to the teeth 655 locking the insert 650 within the U-shape of the battery pack 600. The tongue features 653 of the locking insert 650 are received by the groove 620 such that once the teeth 622 and 655 are engaged, the locking insert 650 cannot slide out along the teeth. During removal, the first flexible member 662 and second flexible member 664 can be deflected inward towards each other. When force is applied to deflect first flexible member 662 and second flexible member 664 the internal retaining feature 660 breaks, allowing the locking insert 650 to be released. Alternatively, the retaining feature 660 is a deflectable piece that can be deflected to allow the first flexible member 662 and second flexible member 664 to be deflected inward towards each other without breaking the retaining feature 660.

It is understood that variations may be made in the foregoing without departing from the scope of the present disclosure. In several exemplary embodiments, the elements and teachings of the various illustrative exemplary embodiments may be combined in whole or in part in some or all of the illustrative exemplary embodiments. In addition, one or more of the elements and teachings of the various illustrative exemplary embodiments may be omitted, at least in part, and/or combined, at least in part, with one or more of the other elements and teachings of the various illustrative embodiments.

Any spatial references, such as, for example, "upper," "lower," "above," "below," "between," "bottom," "vertical," "horizontal," "angular," "upwards," "downwards," "side-to-side," "left-to-right," "right-to-left," "top-to-bottom," "bottom-to-top," "top," "bottom," "bottom-up," "top-down," etc., are for the purpose of illustration only and do not limit the specific orientation or location of the structure described above.

In several exemplary embodiments, while different steps, processes, and procedures are described as appearing as distinct acts, one or more of the steps, one or more of the processes, and/or one or more of the procedures may also be performed in different orders, simultaneously and/or sequentially. In several exemplary embodiments, the steps, processes, and/or procedures may be merged into one or more steps, processes and/or procedures.

In several exemplary embodiments, one or more of the operational steps in each embodiment may be omitted. Moreover, in some instances, some features of the present disclosure may be employed without a corresponding use of the other features. Moreover, one or more of the above-described embodiments and/or variations may be combined in whole or in part with any one or more of the other above-described embodiments and/or variations.

Although several exemplary embodiments have been described in detail above, the embodiments described are exemplary only and are not limiting, and those skilled in the art will readily appreciate that many other modifications, changes and/or substitutions are possible in the exemplary embodiments without materially departing from the novel teachings and advantages of the present disclosure. Accordingly, all such modifications, changes, and/or substitutions are intended to be included within the scope of this disclosure as defined in the following claims. In the claims, any means-plus-function clauses are intended to cover the structures described herein as performing the recited function and not only structural equivalents, but also equivalent structures. Moreover, it is the express intention of the applicant not to invoke 35 U.S.C. § 112, paragraph 6 for any limitations of any of the claims herein, except for those in which the claim expressly uses the word "means" together with an associated function.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### REPRESENTATIVE FEATURES

Representative features are set out in the following clauses, which stand alone or may be combined, in any combination, with one or more features disclosed in the text and/or drawings of the specification.
1. A sensor node configured to measure one or more parameters of a piece of equipment and communicate with a sensor network, the sensor node comprising:
   a sensor board comprising a plurality of electrical contacts; and
   a sensor housing defining a cavity, wherein the sensor board is disposed within the cavity, the sensor housing comprising:
      a first side wall defining a window, wherein the window exposes the plurality of electrical contacts of the sensor board; and
      a first sliding lock leg extending from the first side wall and defining a groove between the first sliding lock leg and the first side wall.
2. The sensor node of clause 1, wherein the first sliding lock leg is configured to retain a battery pack relative to the sensor housing.
3. The sensor node of clause 1 or 2, wherein the first sliding lock leg further comprises:
   a narrow portion adjacent to the first side wall;
   a wider portion on the portion away from the wall; and
   wherein the narrow portion adjacent to the first side wall and the wider portion on the portion away from the wall define the groove.
4. The sensor node of any of clauses 1-3, wherein the sensor housing further comprises a second sliding lock leg extending from the first side wall and defining a groove between the second sliding lock leg and the first side wall, wherein the second sliding lock leg is configured to retain a battery pack relative to the sensor housing and align a plurality of electrical contacts of the sensor board through the window.
5. The sensor node of clause 4, wherein the first sliding lock leg is parallel to the second sliding lock leg.
6. The sensor node of clause 4 or 5, wherein the first sliding lock leg and second sliding lock leg are positioned on opposite sides of the window.
7. The sensor node of any of clauses 1-6, wherein the sensor housing further comprises a third wall defining a groove, wherein the groove is configured to retain a mating component relative to the sensor housing.
8. The sensor node of any of clauses 1-7, wherein the sensor housing further comprises:
   a second side wall defining a first recessed area;
   the first recessed area comprises a ledge, wherein the ledge is configured to retain a mating component relative to the sensor housing.
9. The sensor node of clause 8, wherein the mating component is a mounting plate.
10. A sensor module comprising:
   a sensor node configured to measure one or more parameters of a piece of equipment and communicate with a sensor network, the sensor node comprising:
      a sensor board comprising an electrical contact; and
      a sensor housing defining a cavity, wherein the sensor board is disposed within the cavity, the sensor housing comprising:
         a first side wall defining a window, wherein the window exposes the electrical contact of the sensor board; and
         a first sliding lock leg extending from the first side wall and defining a groove between the first sliding lock leg and the first side wall;
      a battery pack configured to energize the sensor node, the battery pack comprising:
         a battery pack body containing one or more battery cells, the battery pack body defining a first slide lock channel, wherein the first slide lock channel receives the first sliding lock leg of the sensor housing to retain the sensor node to the battery pack; and
         a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel.
11. The sensor module of clause 10, wherein the battery pack body has a generally rectangular prism shape.
12. The sensor module of clause 10 or 11, wherein the first slide lock channel and the battery connector interface are disposed on a base of the rectangular prism shape of the battery pack body.
13. The sensor module of any of clauses 10-12, further comprising a mounting plate coupled to the battery pack and the sensor node, wherein the mounting plate is configured to be coupled to the piece of equipment.
14. The sensor module of clause 13, wherein the mounting plate is configured to be coupled to a piece of loading dock equipment.
15. The sensor module of any of clauses 10-14, wherein the battery pack body defines a U-shaped profile with a central channel.
16. The sensor module of clause 15, wherein the first slide lock channel and the battery interface are disposed opposite to the central channel of the battery pack body.
17. The sensor module of clause 15 or 16, wherein the central channel of the battery pack body is configured to receive a shaft of a piece of equipment.
18. The sensor module of clause 17, further comprising a locking insert disposed within the central channel of the battery pack body and releasably coupled to the battery pack body.
19. The sensor module of clause 17 or 18, wherein the locking insert is configured to capture a shaft of a piece of equipment between the locking insert and the battery pack body to couple the sensor module to the piece of equipment.
20. The sensor module of any of clauses 10-19, wherein the connection of the electrical contacts of the sensor and the battery connector interface are sealed.
21. A sensor module, comprising:
   a sensor node configured to measure one or more parameters of a piece of equipment and communicate with a sensor network, the sensor node comprising:
      a sensor board comprising an electrical contact; and
      a sensor housing defining a cavity, wherein the sensor board is disposed within the cavity, the sensor housing comprising:
         a first side wall defining a window, wherein the window exposes the electrical contact of the sensor board; and
         a first sliding lock leg extending from the first side wall and defining a groove between the fit sliding lock leg and the first side wall;
         a second side wall opposite the first wall;
         a first ledge defining a first recessed area within the second side wall; wherein the first recessed area is configured to receive a mating component relative to the sensor housing and the first ledge is configured to connection between the first sliding lock leg and
      the mating component into place;
   a battery pack configured to energize the sensor node, the battery pack comprising:
      a battery pack body containing one or more battery cells,
      the battery pack body defining a first slide lock channel, wherein the first slide lock channel receives the first sliding lock leg of the sensor housing to retain the sensor node to the battery pack; and
      the battery pack body defining a ramp profile, wherein the ramp profile is disposed on a movable member extending from the surface of the battery pack body that is opposite the first slide lock channel;
      a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and
   a mounting plate configured to be coupled to a piece of equipment, the mounting plate comprising:
      a mounting plate base;
      a non-deflectable end wall extending perpendicular to the mounting plate base, wherein the mounting plate base and the non-deflectable end wall receive the sensor node and the battery pack;
      a ramped retention protrusion extending perpendicular to the end wall, wherein the non-deflectable end wall is biased to engage the ramped retention protrusion with the recessed area of the sensor node and releasably retain the sensor node and the battery pack to the mounting plate.
22. The sensor module of clause 21, wherein the ramped retention protrusion is deflected away from the non-deflectable end wall to release the sensor node and the battery pack from the mounting plate.
23. The sensor module of clause 21 or 22, wherein the mounting plate is coupled to loading dock equipment.
24.The sensor module of clause 23, wherein the sensor node is capable of measuring parameters of the loading dock equipment.
25. The sensor module of clause 23 or 24, wherein the loading dock equipment is a door.
26. The sensor module of any of clauses 21-25, the mounting plate further comprising:
   a second end wall extending perpendicular to the mounting base plate and opposite the non-deflectable end wall; and
   a ledge extending perpendicular to the second end wall, wherein the ledge engages the ramp profile extending from the battery pack body.
27. A sensor module comprising,
   a sensor node configured to measure one or more parameters of a piece of equipment and communicate with a sensor network, the sensor node comprising:
      a sensor board comprising an electrical contact; and
      a sensor housing defining a cavity, wherein the sensor board is disposed within the cavity, the sensor housing comprising:
         a first side wall defining a window, wherein the window exposes the electrical contact of the sensor board; and
         a first sliding lock leg extending from the first side wall and defining a groove
      between the first sliding lock leg and the first side wall;
   a battery pack configured to energize the sensor node, the battery pack comprising:
      a battery pack body containing one or more battery cells, the battery pack body defining a first slide lock channel, wherein the first slide lock channel receives the first sliding lock leg of the sensor housing to retain the sensor node to the battery pack;
      the battery pack body defining a U-shaped profile with a central channel; and
   a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and
      a locking insert comprising:
      a first wall; and
      a second wall movable relative to the first wall, wherein the locking insert is disposed within the central channel of the battery pack body and the second wall is movable to releasably couple the locking insert to the battery pack body.
28. The sensor module of clause 27, wherein:
   the locking insert further comprises a set of teeth disposed on an external surface of the
   first wall, wherein the set of teeth engage the body of the battery pack body.
29. The sensor module of clause 27 or 28, wherein the battery pack body further comprises a plurality of teeth disposed on an inner surface of the central channel to engage with the locking insert.
30. The sensor module of any of clauses 27-29, wherein, the central channel of the battery pack is configured to receive a shaft of a piece of equipment.
31. The sensor module of any of clauses 27-30, wherein the locking insert further comprises:
   a first flexible tab;
   a second flexible tab parallel to the first flexible tab; and
   a retaining feature positioned between the first flexible tab and the second flexible tab, wherein the retaining feature is configured to allow the first flexible tab and second flexible tab to be pushed together.
32. The sensor module of any of clauses 27-31, wherein the locking insert further comprises:
   a first movable member adjacent to the first wall, wherein the first movable member can be deflected towards the body of the locking insert;
   a second movable member adjacent to the second wall, wherein the second movable member can be deflected toward the body of the locking insert; and
   the first movable member and second movable member are configured to deflect when coupled to a shaft of a piece of equipment.

## Claims

1. A sensor node configured to measure one or more parameters of a piece of equipment and communicate with a sensor network, the sensor node comprising:
a sensor board comprising a plurality of electrical contacts; and
a sensor housing defining a cavity, wherein the sensor board is disposed within the cavity, the sensor housing comprising:
a first side wall defining a window, wherein the window exposes the plurality of electrical contacts of the sensor board; and
a first sliding lock leg extending from the first side wall and defining a groove between the first sliding lock leg and the first side wall.

2. A sensor node according to claim 1, wherein the first sliding lock leg is configured to retain a battery pack relative to the sensor housing.

3. A sensor node according to any preceding claim, wherein the first sliding lock leg further comprises:
a narrow portion adjacent to the first side wall;
a wider portion on the portion away from the wall; and
wherein the narrow portion adjacent to the first side wall and the wider portion on the portion away from the wall define the groove.

4. A sensor node according to any preceding claim, wherein the sensor housing further comprises a second sliding lock leg extending from the first side wall and defining a groove between the second sliding lock leg and the first side wall, wherein the second sliding lock leg is configured to retain a battery pack relative to the sensor housing and align a plurality of electrical contacts of the sensor board through the window.

5. A sensor node according to claim 4, wherein:
a) the first sliding lock leg is parallel to the second sliding lock leg; and/or
b) the first sliding lock leg and second sliding lock leg are positioned on opposite sides of the window.

6. A sensor node according to any preceding claim, wherein the sensor housing further comprises a third wall defining a groove, wherein the groove is configured to retain a mating component relative to the sensor housing.

7. A sensor node according to any preceding claim, wherein:
a) the sensor housing further comprises:
a second side wall defining a first recessed area;
the first recessed area comprises a ledge, wherein the ledge is configured to retain a mating component relative to the sensor housing; and/or
b) the sensor housing further comprises:
a second side wall defining a first recessed area;
the first recessed area comprises a ledge, wherein the ledge is configured to retain a mating component relative to the sensor housing, and the mating component is a mounting plate.

8. A sensor module comprising:
a sensor node according to claim 1;
a battery pack configured to energize the sensor node, the battery pack comprising:
a battery pack body containing one or more battery cells, the battery pack body defining a first slide lock channel, wherein the first slide lock channel receives the first sliding lock leg of the sensor housing to retain the sensor node to the battery pack; and
a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel.

9. A sensor module according to claim 8, wherein:
a) the battery pack body has a generally rectangular prism shape; and/or
b) the battery pack body has a generally rectangular prism shape and the first slide lock channel and the battery connector interface are disposed on a base of the rectangular prism shape of the battery pack body; and/or
c) the sensor module further comprises a mounting plate coupled to the battery pack and the sensor node, wherein the mounting plate is configured to be coupled to the piece of equipment; and/or
d) the mounting plate is configured to be coupled to a piece of loading dock equipment.

10. A sensor module according to claim 8 or 9, wherein:
a) the battery pack body defines a U-shaped profile with a central channel; and/or
b) the battery pack body defines a U-shaped profile with a central channel and the first slide lock channel and the battery interface are disposed opposite to the central channel of the battery pack body; and/or
c) the battery pack body defines a U-shaped profile with a central channel and the central channel of the battery pack body is configured to receive a shaft of a piece of equipment; and/or
d) the battery pack body defines a U-shaped profile with a central channel and the central channel of the battery pack body is configured to receive a shaft of a piece of equipment, the sensor module further comprising a locking insert disposed within the central channel of the battery pack body and releasably coupled to the battery pack body; and/or
e) the battery pack body defines a U-shaped profile with a central channel and the central channel of the battery pack body is configured to receive a shaft of a piece of equipment, the sensor module further comprising a locking insert disposed within the central channel of the battery pack body and releasably coupled to the battery pack body, and the locking insert is configured to capture a shaft of a piece of equipment between the locking insert and the battery pack body to couple the sensor module to the piece of equipment.

11. A sensor module according to any of claims 8-10, wherein the connection of the electrical contacts of the sensor and the battery connector interface are sealed.

12. A sensor module, comprising:
a sensor node according to claim 1;
a second side wall opposite the first wall;
a first ledge defining a first recessed area within the second side wall; wherein the first recessed area is configured to receive a mating component relative to the sensor housing and the first ledge is configured to connection between the first sliding lock leg and the mating component into place;
a battery pack configured to energize the sensor node, the battery pack comprising:
a battery pack body containing one or more battery cells,
the battery pack body defining a first slide lock channel, wherein the first slide lock channel receives the first sliding lock leg of the sensor housing to retain the sensor node to the battery pack; and
the battery pack body defining a ramp profile, wherein the ramp profile is disposed on a movable member extending from the surface of the battery pack body that is opposite the first slide lock channel;
a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and
a mounting plate configured to be coupled to a piece of equipment, the mounting plate comprising:
a mounting plate base;
a non-deflectable end wall extending perpendicular to the mounting plate base, wherein the mounting plate base and the non-deflectable end wall receive the sensor node and the battery pack;
a ramped retention protrusion extending perpendicular to the end wall, wherein the non-deflectable end wall is biased to engage the ramped retention protrusion with the recessed area of the sensor node and releasably retain the sensor node and the battery pack to the mounting plate.

13. A sensor module according to claim 12, wherein:
a) the ramped retention protrusion is deflected away from the non-deflectable end wall to release the sensor node and the battery pack from the mounting plate; and/or
b) the mounting plate is coupled to loading dock equipment; and/or
c) the mounting plate is coupled to loading dock equipment and the sensor node is capable of measuring parameters of the loading dock equipment; and/or
d) the mounting plate is coupled to loading dock equipment and the loading dock equipment is a door; and/or
e) the mounting plate further comprises:
a second end wall extending perpendicular to the mounting base plate and opposite the non-deflectable end wall; and
a ledge extending perpendicular to the second end wall, wherein the ledge engages the ramp profile extending from the battery pack body.

14. A sensor module comprising,
a sensor node according to claim 1;
a battery pack configured to energize the sensor node, the battery pack comprising:
a battery pack body containing one or more battery cells, the battery pack body defining a first slide lock channel, wherein the first slide lock channel receives the first sliding lock leg of the sensor housing to retain the sensor node to the battery pack;
the battery pack body defining a U-shaped profile with a central channel; and
a battery connector interface extending through the battery pack body and disposed adjacent to the first slide lock channel, wherein the battery connector interface is aligned with the first slide lock channel to permit at least one of the plurality of electrical contacts of the sensor to contact the battery connector interface when the first sliding lock leg of the sensor is engaged with the first slide lock channel; and
a locking insert comprising:
a first wall; and
a second wall movable relative to the first wall, wherein the locking insert is disposed within the central channel of the battery pack body and the second wall is movable to releasably couple the locking insert to the battery pack body.

15. A sensor module according to claim 14, wherein:
a) the locking insert further comprises a set of teeth disposed on an external surface of the first wall, wherein the set of teeth engage the body of the battery pack body; and/or
b) the battery pack body further comprises a plurality of teeth disposed on an inner surface of the central channel to engage with the locking insert; and/or
c) the central channel of the battery pack is configured to receive a shaft of a piece of equipment.; and/or
d) the locking insert further comprises:
a first flexible tab;
a second flexible tab parallel to the first flexible tab; and
a retaining feature positioned between the first flexible tab and the second flexible tab, wherein the retaining feature is configured to allow the first flexible tab and second flexible tab to be pushed together; and/or
e) the locking insert further comprises:
a first movable member adjacent to the first wall, wherein the first movable member can be deflected towards the body of the locking insert;
a second movable member adjacent to the second wall, wherein the second movable member can be deflected toward the body of the locking insert; and
the first movable member and second movable member are configured to deflect when coupled to a shaft of a piece of equipment.
